# EUROPEAN PATENT APPLICATION

(11) **EP 2 078 979 A1**
(43) Date of publication of application: **15.07.2009**
(21) Application number: 08156725.7
(22) Date of filing: 22.05.2008
(51) Int. Cl.: G02F 1/1362

(54) **Pixel design having reduced parasitic capacitance for an active matrix display**

(30) Priority: 25.12.2007 US 16595 P
(71) Applicant: TPO Displays Corp., Miao-Li County (TW)
(72) Inventor: Collins, Paul, Surrey RH6 7AW (GB)
(74) Representative: Ertl, Nicholas Justin

(57) **Abstract**

A display pixel arrangement is provided in which the row electrode metal layer (58), defining the scan lines and the storage capacitance lines, is arranged between the pixel electrode layer (64) and the metal layer (50) defining the columns (50a). In this way, a portion of the storage capacitance line extending above and along the column (data)line can be used to provide a shield between the pixel electrodes (64) and the column lines (50a), thereby reducing capacitive coupling between adjacent pixels, even if the pixel electrodes overlap the column lines. This improves the performance of digital to analogue conversion, particularly if charge sharing between columns is used.

## Description

This invention relates to a pixel design for active matrix displays, and which is particularly suitable for displays having driver circuitry integrated onto the substrate of the pixel array.

This integration of driver circuitry onto the pixel substrate for a liquid crystal display is known as a "System On Panel (SOP)" approach. SOP Liquid Crystal Displays (LCDs) can only be achieved with Low Temperature Poly Silicon (LTPS) and they range from basic integrated functionality (in a first level of system on panel integration, termed SOP1) such as the row driver and multiplexer, to the addition of other circuits (in a second level of system on panel integration, termed SOP2) such as:
charge pump circuits, for DC to DC conversion, for example from a lower battery voltage to a higher positive circuit rail voltage;
circuits for driving the common electrode Vcom with a switching voltage profile;
the resistor string for use in the digital to analogue converter (DAC);
the source (i.e. column) driver.

By putting more of the circuits on the glass substrate of the pixel array, the cost and complexity of the external drive ICs can be reduced.

LTPS also offers the opportunity to integrate additional functionality not possible in amorphous silicon, Memory in Pixel (MIP) being one example. The direction of mobile consumer markets to design increasingly higher resolution panels, for example 300dpi, with increased brightness up to 400 cd/m², colour depths at 8-bit giving 16.7 million colours, contrast ratio of 300:1, and lower power, all continue to make SOP2 a difficult and ongoing challenge to address.

To solve these challenges, display manufactures are further pushing the design rules of LTPS transistors, but in many fabrication facilities the processing and/or performance is not yet capable of reaching the standards required for mass production, mainly as a result of issues with TFT stability, yield, and panel size.

In order to achieve the high (SOP2) level of integration in LTPS and also design a market-competitive display, alternative display driving methods must be explored. With the source driver of a typical LTPS panel requiring the greatest area footprint, and often most complex analogue electronics, an alternative source driver implementation has been seen as beneficial. Previous investigations into novel driving methods have highlighted an approach known as direct Digital Column Drive (DCD) as a possible candidate.

The DCD system in its basic form is an array of switches (transmission gates) connecting pairs of columns together to perform the charge sharing operations. Digital data is applied either by external connections or via a serial input shift register to minimise the number of pin-outs.

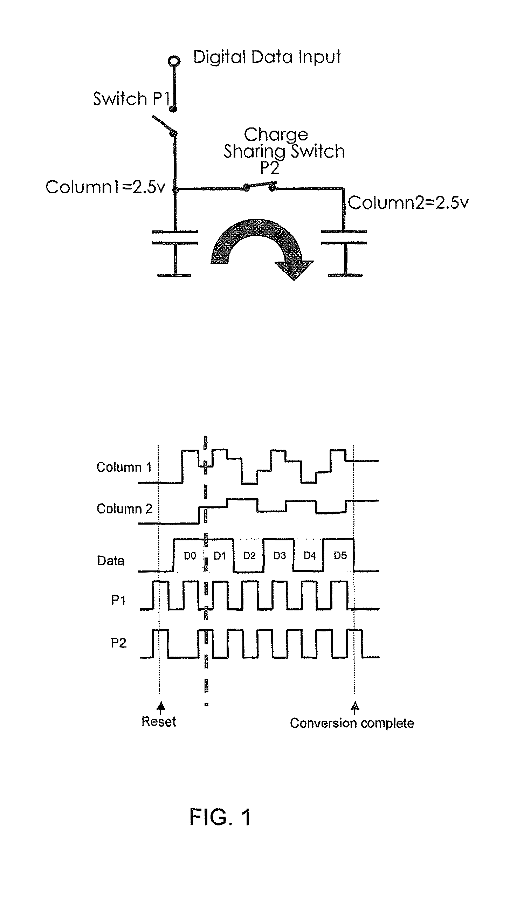

The DCD approach is explained with reference to Figure 1, which shows the basic DCD circuit for controlling the application of data to a pair of columns, and a timing diagram.

The circuit comprises a first switch P1 used to connect or isolate the first column of the pair (column1) from a digital data input. A second switch P2 is used to couple the two columns together to implement a charge sharing between the column capacitances of the two columns.

For the explanation below, it is assumed that the digital input voltage is either 0V or 5V.

A switching sequence is used to derive an (equal) analogue voltage on the two columns. In particular, a first bit of digital data is converted to an analogue voltage on the two columns. Further bits then give more analogue levels. For example,

### Example 1 - data input 11

- A first digital '1' gives 5V on column 1 only (P2 open and P1 closed), and charge sharing (P2 closed and P1 open) then results in 2.5v on each column.
- A second digital '1' charges column 1 only back to 5V, and charge sharing then results in 3.75V on each column

### Example 2 - data input 10

- A first digital '1' gives 5V on column 1 only (P2 open and P1 closed), and charge sharing (P2 closed and P1 open) then results in 2.5v on each column.
- A second digital '0' discharges column 1 only back to 0V, and charge sharing then results in 1,25V on each column

### Example 3 - data input 01

- A first digital '0' gives 0V on column 1 only (P2 open and P1 closed), and charge sharing (P2 closed and P1 open) then results in 0V on each column.
- A second digital '1' charges column 1 only to 5V, and charge sharing then results in 2.5V on each column

### Example 4 - data input 00

- A first digital '0' gives 0V on column 1 only (P2 open and P1 closed), and charge sharing (P2 closed and P1 open) then results in 0V on each column.
- A second digital '0' does not change the voltages and 0V is on each column

The timing diagram shows the alternating loading and charge sharing. The dotted line shows the time at which the circuit has the switch configurations and voltages shown in the circuit.

In this scheme, the two adjacent columns are driven to the same voltage.

In order to avoid a reduction in resolution, separate row conductors for odd and even columns are provided (not shown in the figures), so that the resulting column voltage is only loaded into the pixel in one column, using one of the row conductors. A new column voltage is loaded into the pixel in the other column using the other row conductor. Further details, for example concerning the choice of columns for which the charge sharing is implemented, can be found in WO 2005/017867 and WO 2005/078696.

The principle of DCD offers a number of distinct advantages over standard source drivers. It provides a simple compact design with a small layout area. This enables a narrow ledge (i.e. border around the display). The circuit operation is robust against LTPS process variations and processing issues. There is no increase in circuit complexity to increase the D/A bit depth. A direct digital interface can be provided, and the use of a serial input can reduce interconnects. Designs with high multiplex ratios can be implemented, even for small panel sizes, for example a 12:1 multiplex ratio is possible for QQVGA (i.e. handheld device displays).

However, the methods by which DCD operates creates some unique disadvantages when used with a standard pixel array. This invention provides pixel circuit designs which address these issues, although it is noted that the invention is not limited to particular column drive schemes, and has wider application.

The DCD driving scheme has one key problem with its operation which derives from the fact that the columns (in odd/even groups) are high impedance during the D/A conversion. In other words, during the conversion process, the columns are floating.

Figure 1 shows that as switch P1 is closed, column1 is charging and is low impedance (i.e. connected to the drive circuit), and switch P2 is open with column2 high impedance, i.e. not connected to any external inputs or local buffers.

This means that the image data present on the columns is very easily corrupted which causes shifts in the image grey levels from their desired values.

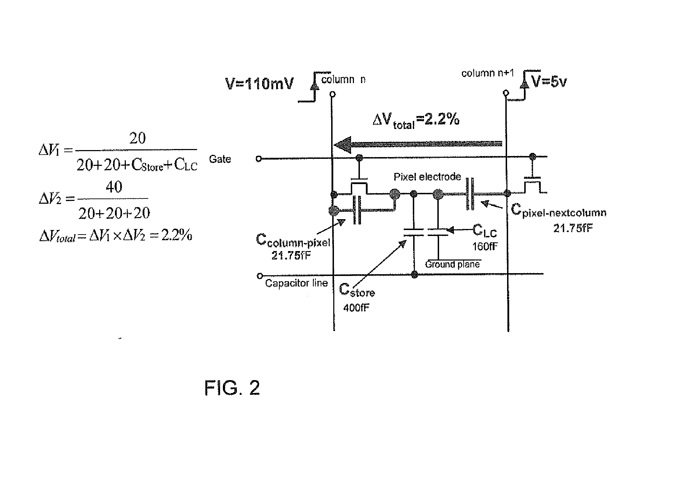

This creates a shift on the intended grey levels and is caused by column-to-column voltage coupling, and only occurs to neighbouring columns. Figure 2 shows the pixel circuit and shows that the level of voltage coupling from one column to the next can be quite large.

Figure 2 shows a typical pixel circuit. A column electrode connects to a TFT source, and the TFT drain is coupled to the pixel electrode. The LC cell defines a capacitance C_{LC} to a ground plane. The pixel also includes an-in pixel capacitor Cₛₜₒᵣₑ, which assists in storing a signal on the pixel after the TFT has been turned off. The in-pixel capacitor connects between the pixel electrode and a row-wise capacitor line. In known manner, the capacitor line can be switched, or it can simply be a ground line. The TFT is turned on by signals applied to row-wise gate lines.

The pixel circuit will be well known to those skilled in the art.

Figure 2 shows how a 5V step change on one column (column n+1) can translate to a 110mV step change on the previous column (column n), which will be in the high impedance floating state at the time when the 5V step change is applied.

This error appears to be quite significant but only occurs if the neighbouring column has a single change of the data voltage on it during the conversion process.

if the neighbouring column remains at 5V or 0V during the conversion process, then this will not give rise to any error. The effect of changes in voltage will also become smaller and smaller as further charge sharing (D/A conversions) take place, because the voltage changes become smaller as the column approaches its final voltage. For example, the effect can reduce from 110mV to 55mV to 27mV to 13mV to 6mV.

It is apparent therefore that the voltage coupling effect is dependent on the voltage to which the column is being driven, as this dictates the sequence of voltage changes on the columns. In particular, the voltage error is dependent on the digital code.

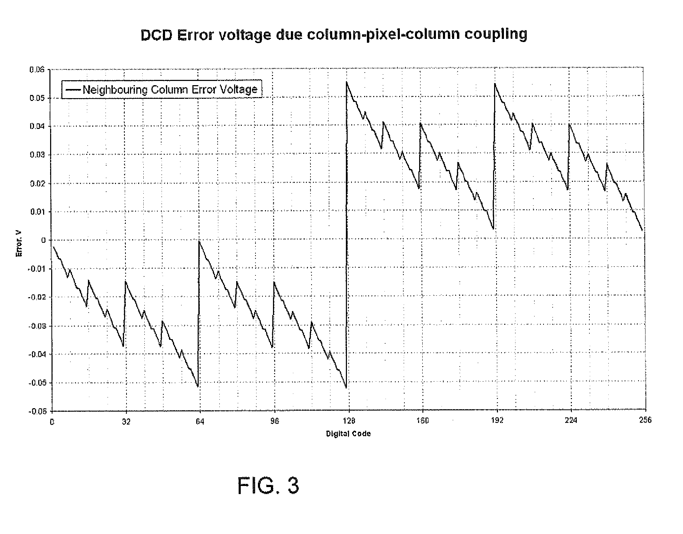

Figure 3 is a graph showing the error that occurs for each digital code on its neighbouring pixel, based on an 8 bit digital code. It is clear to see the error is quite complex and difficult to visualise.

However, the peaks in the error signal correspond to digital codes in which there is a single 1 to 0 or 0 to 1 transition, so that the column voltage jumps in one step from 0 to 5V or from the high shared voltage it has already reached (from a sequence of 1 s) back to zero.

Examples of large errors are 1111,1110 = 127, 0000,0001 = 128 and 1111,1100=63.

If during the conversion, the bit sequence changes back, some error cam be removed as there is a voltage coupling effect in both directions. An example is 0000,0010 = 64.

To summarise, only data changes on neighbouring columns cause an error. Uniform fields (continuous grey levels on each pixel) will not show errors, as every column is affected the same way.

Digital codes with 'one way' highly varying bit sequences at the Most Significant Bits (MSBs) will cause more error.

The human eye is susceptible to edges with changes in grey level, especially at mid grey when considering the LC transmission curve. This means these errors are less (or not) visible in pictures but are visible in text and icons at some mid grey levels.

These errors are expected to show some image distortion, most likely a colour break up, around the edges of objects.

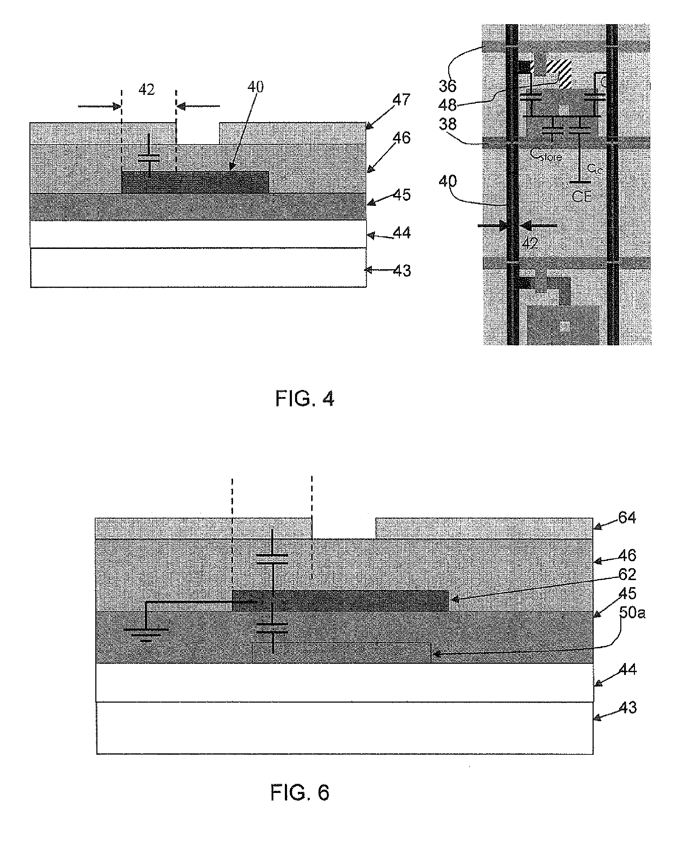

A DCD display would be a key technological breakthrough for achieving the SOP2 functionality outlined above in a mass production facility, but only if the display image quality shows no visible signs of artefacts. However this is not possible using a standard field shielded pixel as shown in Figure 4.

This pixel design forms has the row electrode lines 36 (and capacitor line 38) formed as the lowest metal layer of the structure. The columns are formed as a second metal layer 40. The pixel electrodes 47 are at the top of the structure. The pixel electrodes modulate the liquid crystal layer, and any part of the liquid crystal layer not modulated will act as a transparent portion through which backlight illumination can directly reach the viewer.

Figure 4 shows the pixel in plan view (right image) and a cross section through the column (left image). The cross section shows the substrate 43, and overlying gate oxide layer 44 (Sio2) and the interlayer dielectric 45. A passivating layer 46 is shown over the column electrode 40, on top of which is provided the transparent pixel electrode 47. The cross section does not show the polysilicon island used to form the TFT channel; this is the region 48.

The plan view shows schematically the stray capacitances in the pixel circuit, corresponding to those explained with reference to Figure 2.

The issue with the standard field shielded pixel design is that each column electrode has an overlap with the ITO pixel electrode to stop this light leakage around the edges of the pixel, which would otherwise cause a problem for high contrast ratios. Thus, the column electrodes act as a light shield, and they are deliberately wider than the spacing between the pixel electrodes, so that shielding of non-normal light is also provided. The overlap is shown as 42.

This overlap of the ITO pixel electrode and the columns is the cause for the high column-to-column capacitance. Reducing the coupling to 1% with this pixel layout would require a very large storage capacitor, significantly reducing aperture. Reducing this coupling using alternative circuits or drive schemes has not been possible.

According to the invention, there is provided a display device comprising an array of display pixels arranged in rows and columns,
wherein the pixel array comprises:
a substrate;
a column electrode metal layer over the substrate, which defines column electrode lines;
a row electrode metal layer above, in terms of the layer order, the column electrode metal layer, which defines row electrode lines, a row-wise capacitor line and a column portion which is provided over a part of the column electrode line;
a pixel electrode metal layer above, in terms of the layer order, the row electrode metal layer, wherein the pixel electrode layer defines pixel electrodes which overlap the column portion of the row electrode metal layer.

In this arrangement, the row electrode metal layer is between the pixel electrode layer and the metal layer defining the columns. In this way, it can be used to provide a shield between the pixel electrodes and the column lines, thereby reducing capacitive coupling between adjacent pixels, even if the pixel electrodes overlap the column lines. This improves the performance of digital to analogue conversion, particularly if charge sharing between columns is used.

The column electrode metal layer also defines a gate electrode for each pixel. The row electrode layer also defines a source electrode region and a drain electrode region for each pixel. A semiconductor layer defines a TFT channel. This arrangement thus does not require any additional layers to a convention layout in order to define the required rows, columns, capacitor storage lines, source contacts, drain contacts and gate contacts. The semiconductor layer can also define a pixel storage capacitor electrode.

Each pixel comprises:
a connection for connecting the column line to the source electrode region;
a connection for connecting the source electrode region to the semiconductor layer;
a connection connecting the row line to the gate electrode;
a connection for connecting a drain region of the semiconductor layer to the drain electrode region;
a connection for connecting the pixel storage capacitor electrode to the row-wise capacitor line; and
a connection which connects the pixel electrode to the drain electrode region.

These connections are vias, and they provide the required circuit connections. The semiconductor layer can comprise polysilicon, and this is suitable to enable integration of the row driver circuit for providing row select pulses to the rows of pixels in a sequence and/or the column driver circuitry for providing pixel drive signals to the columns of pixels.

The invention is of particular benefit in an arrangement in which the column driver circuit comprises a digital to analogue converter in the form of a switched capacitor charge sharing converter, such as a so-called digital column drive converter.

The invention is suitable for liquid crystal displays.

Examples of the invention will now be described with reference to the accompanying drawings, in which:
Figure 1 is used to explain the known principle of digital column drive (DCD);
Figure 2 shows a conventional pixel circuit and is used to explain how the capacitances in the circuit influence the performance of a DCD converter;
Figure 3 shows the errors which result from the use of the circuit of Figure 2;
Figure 4 shows in simplified form a standard field shielded pixel layout for implementing the circuit of Figure 2;
Figure 5 shows a pixel layout of the invention for implementing the circuit of Figure 2;
Figure 6 shows a cross section from Figure 5; and
Figure 7 shows the errors which result from the use of the circuit of Figure 5.

The same reference numerals have been used in different figures when these relate to the same components or layers, and a description is then not repeated.

The invention provides a pixel structure that reduces the column-pixel-column coupling while maintaining the light shielding benefits of a typical AMLCD field shielded pixel.

One possible approach considered by the applicant in order to reduce the coupling between each pair of columns, occurring via the column-pixel-column capacitance, is to use a non field shielded layout of the ITO to decrease the overlap. This may not be acceptable as light can leak out around the ITO pixel electrode and reduce the display contrast ratio.

Another possible approach considered by the applicant is to include a metal layer between the column electrode and the pixel electrode to act as a ground plane. This is not practical as there is no available extra metal layer between the column metal layer and the pixel ITO.

The invention is based on an approach in which the columns are changed to be made out of the bottom metal layer, which is traditionally used for the rows of an AMLCD. This enables the metal traditionally used for the columns to function as a ground plane.

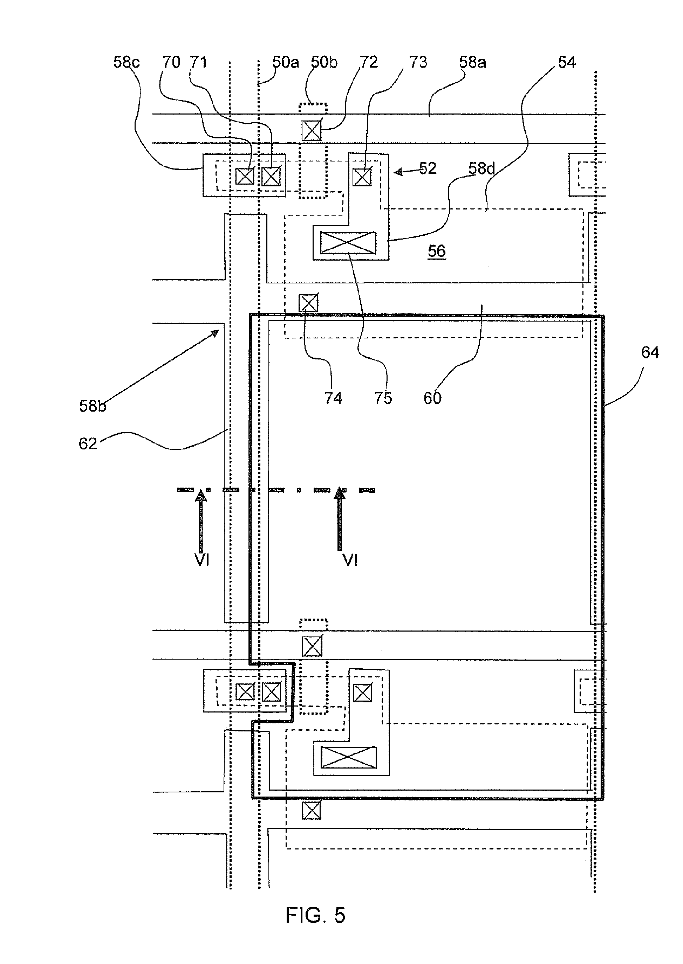

Figure 5 shows how the pixel is laid out. In Figure 5, only one pixel electrode is shown (and pixel transistors for two adjacent pixels), but of course the display will comprise an array of pixels to the desired resolution.

A polysislicon layer is shown as 54 provided on the substrate, and this forms the TFT channel as well as an in-pixel storage capacitor electrode 56. The gate oxide layer 44 is provided over the substrate (either patterned or over the entire substrate), and forms the gate dielectric. This is not shown in Figure 5.

A lower metal layer is shown as portions 50a and 50b. Portion 50a is the column line to which the data signals are provided. Portion 50b is a gate electrode for the TFT 52. In this way, a top gate structure is defined.

A second metal layer provided above the interlayer dielectric layer 45 (not shown in Figure 5) is shown as portions 58a to 58d.

Portion 58a is the row gate line. Portion 58b defines a capacitor line 60 in the row direction extending continuously across all pixels, but also an overlap region 62 extending in the column direction. This overlaps the column line 50a, and as will be apparent from the description below, it acts as a shield between the top pixel electrode and the column data line 50a.

Portion 58c is source electrode region and portion 58d is a drain electrode region. These connect back down to the polysilicon layer.

The ITO pixel electrode is shown as 64.

This pixel structure still maintains the light shielding around the edges of the ITO layer because it overlaps the capacitor line 60 in the row direction and the overlap region 62 in the column direction. These overlaps provide the necessary high contrast ratio. No additional metal area is needed to make the transition between the two metal layers 50,58.

The pixel electrodes do not have to overlap the column lines 50a, because the portions 60,62 already provide the desired light shielding. However, they do overlap the columns as well (as shown), so that the spacing between the pixel electrodes is as small as possible.

The rows 58a and storage capacitor lines 60 use the metal layer 58 to avoid additional vias between multiple layers. In this arrangement, the storage capacitor line 60, particularly the overlap portions 62 associated with the row-wise lines 60, can be used as a grounding shield to reduce column to column capacitance in the pixel structure.

Figure 6 shows the cross section through the column as shown in Figure 5. As shown in Figure 6, the overlaps, which result in increased capacitance, all couple to the storage capacitor line. One such overlap is between the pixel electrode 64 and the storage capacitor line, and another is overlap between the storage capacitor line and the bottom column line 50a. These capacitances are represented schematically in Figure 6, and this also shows the grounding of the storage capacitor line. The shielding provided of course can equally be achieved with the capacitor line at any fixed potential.

There are some minor disadvantages of using this type of pixel, but these are small when compared to the benefits of solving the key issue of image distortion, which has been assessed to be only limitation of DCD. For example, power and speed up to QVGA resolutions has proved not to be any inferior to a standard AMLCD.

One such limitation of the proposed pixel structure is an increase in the column capacitance to the column shield, as a result of the overlap portions 62. This increases the power consumption. The other change from a standard pixel is the need for additional vias to make the connections to the gate and drain of the drive TFT plus connection to the storage capacitor.

The vias in the pixel structure are all shown in Figure 5, and they are:
a via 70 for connecting the column line 50a to the source electrode region 58c through the interlayer dielectric 45 and the polysilicon layer. It is noted that the polysilicon layer 54 extends under the column 50a for step coverage reasons, but this is not essential.
a via 71 for connecting the source electrode region 58c directly to the polysilicon area which defines the TFT source through the interlayer dielectric 45 and the gate dielectric 44;
a via 72 connecting the row line 58a to the gate electrode 50b through the interlayer dielectric 45 and the gate dielectric 44;
a via 73 connecting the TFT drain region of the polysilicon layer to the drain electrode region 58d;
a via 74 which connects the lower capacitor electrode 54 defined by the polysilicon layer to the capacitor line 60; and
a via 75 which connects the pixel electrode 64 to the drain electrode region 58d.

It can be seen therefore that the structure shown in Figure 5 implements the circuit of Figure 2.

By using the storage capacitor line 60 as the light shield, there is a much larger capacitance from the columns to the storage capacitor line. However, the connections now run using the metal of layer 58 which is much lower resistance, and any voltage spikes are discharged to ground before the row address period ends, leaving only a small error confined to individual pixels, and which is much smaller than the previous coupling errors.

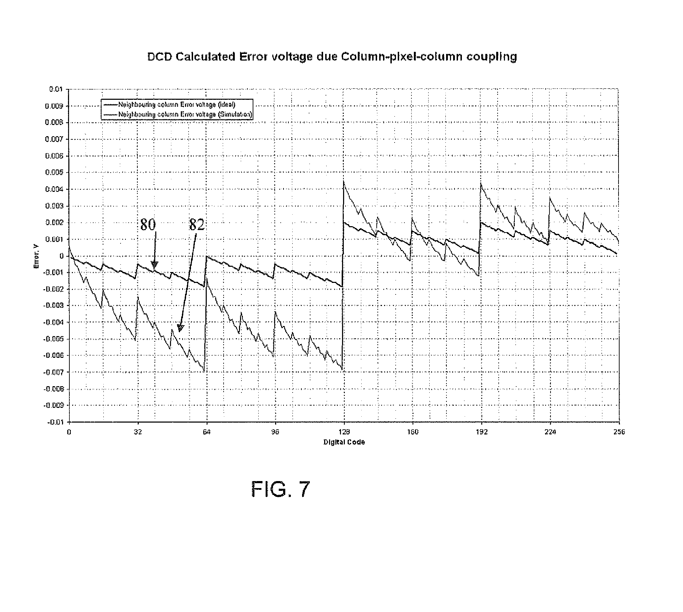

Figure 7 shows the pixel error voltages for the simulations of the pixel configuration using a DCD column addressing scheme.

Figure 7 corresponds to Figure 3 and shows the error levels for each digital code that are achieved by this pixel structure. One plot 80 shows calculated ideal results, and another plot 82 shows circuit simulation results. In the simulated results, the coupling has reduced from 2.2% to 0.08%. The simulation results show a peak error of 11 mV between two grey levels of 127 and 128, this corresponds to a half of the LSB grey level, and this is 10 times smaller than in the prior art circuit, and now indistinguishable to the human eye.

The differences between the simulated and ideal calculated errors highlight the presence of other parts of the pixel/DCD array which can cause some minor error. These may be due to charge remaining on parts of the pixel which have a higher resistance to ground, which in this case is mostly likely the common electrode resistance at the very end of the display. Again, these minor errors will not be visible at a panel resolution of QQVGA but for larger panel sizes could display small 1-2LSB differences from the top to the bottom on a uniform grey image. Generally these could be removed by ensuring the two metal layers are lower resistance, and could be achieved with longer sputtering times for each metal.

This application has key relevance to LTPS AMLCDs and enables high levels of circuit integration (SOP2) in a mass production facility, which currently has not been achieved reliably in many companies due to ever increasing display resolutions, contrast ratios and bit depths. This invention could form part of a mass production QQVGA display. By ensuring suitable conductor resistances, the invention can be applied to displays with higher resolutions and large sizes.

The introduction of additional vias can result in a slight reduction in contrast, as the additional opaque substrate area required as a result of the vias. A small amount of aperture can be gained by creating a via on top of the gate of the pixel TFT and which connects between the two metal layers 50, 58 (i.e. the function of via 72). This would require a slight modification to the TFT by increasing the length of the device to comply with design rules, (widen the width of the gate metal) but the benefit of this would be to have more flexibility on various pixel layouts and increase the transmissive area. The individual processing steps used to form the different layers can all be completely conventional, and have not therefore been described in detail.

Only one detailed implementation has been shown. However, many variations are possible. For example, the TFT layout be different (for example bottom gate instead of top gate). Furthermore, the electrostatic and light shielding provided the arrangement of the invention can be applied to amorphous silicon, polysilicon or indeed other semiconductor technologies. Thus, the invention is not limited to the LTPS implementation.

Various modifications will be apparent to those skilled in the art.

## Claims

1. A display device comprising an array of display pixels arranged in rows and columns,
wherein the pixel array comprises:
a substrate (43);
a column electrode metal layer (50) over the substrate, which defines column electrode lines (50a);
a row electrode metal layer (58) above, in terms of the layer order, the column electrode metal layer (50), which defines row electrode lines (58a), a row-wise capacitor line (60) and a column portion (62) which is provided over a part of the column electrode line (50a);
a pixel electrode metal layer (64) above, in terms of the layer order, the row electrode metal layer (58), wherein the pixel electrode layer (64) defines pixel electrodes which overlap the column portion (62) of the row electrode metal layer.

2. A device as claimed in claim 1, wherein the column electrode metal layer (50) also defines a gate electrode (50b) for each pixel.

3. A device as claimed in any preceding claim, wherein the row electrode layer (58) also defines a source electrode region (58c) and a drain electrode region (58d) for each pixel.

4. A device as claimed in any preceding claim, further comprising a semiconductor layer (54) which defines a TFT channel.

5. A device as claimed in claim 4, wherein the semiconductor layer (54) defines a pixel storage capacitor electrode.

6. A device as claimed in claims 1 to 5, wherein each pixel comprises:
a connection (70) for connecting the column line (50a) to the source electrode region (58c);
a connection (71) for connecting the source electrode region (58c) to the semiconductor layer;
a connection (72) connecting the row line (58a) to the gate electrode (50b);
a connection (73) for connecting a drain region of the semiconductor layer to the drain electrode region (58d);
a connection (74) for connecting the pixel storage capacitor electrode (54) to the row-wise capacitor line (60); and
a connection (75) which connects the pixel electrode (64) to the drain electrode region (58d).

7. A device as claimed in claim 4, 5 or 6, wherein the semiconductor layer (54) comprises polysilicon.

8. A device as claimed in any preceding claim, further comprising:
a row driver circuit for providing row select pulses to the rows of pixels in a sequence; and
column driver circuitry for providing pixel drive signals to the columns of pixels.

9. A device as claimed in claim 8, wherein the row and column driver circuitry is integrated onto the pixel array substrate (43).

10. A device as claimed in claim 8 or 9, wherein the column driver circuit comprises a digital to analogue converter.

11. A device as claimed in claim 10, wherein the digital to analogue converter comprises a switched capacitor charge sharing converter.

12. A device as claimed in claim 11, wherein the digital to analogue converter comprises a digital column drive converter.

13. A device as claimed in any preceding claim, further comprising a liquid crystal layer, which is locally modulated by a signal provided on the pixel electrodes.
